# NEW EUROPEAN PATENT SPECIFICATION

(11) **EP 1 452 087 B2**
(45) Date of publication and mention of the opposition decision: **29.05.2024**
(45) Mention of the grant of the patent: 25.09.2013
(21) Application number: 04100532.3
(22) Date of filing: 12.02.2004
(51) Int. Cl.: A01F 25/20

(54) **Method and apparatus for removing a quantity of fodder from a stock thereof**
Verfahren und Vorrichtung um eine Futtermenge aus einem Futterstock abzutragen
Méthode et dispositif pour l'extraction d'une quantité de foin d'un stock de fourrage

(30) Priority: 14.02.2003 NL 1022678
(43) Date of publication of application: 01.09.2004
(73) Proprietor: Trioliet Mullos B.V., 7575 BE Oldenzaal (NL)
(72) Inventor: Van der Plas, Nicolaas, 7575 BE, Oldenzaal (NL)
(74) Representative: Grünecker Patent- und Rechtsanwälte PartG mbB

(56) References cited:
- EP-A- 0 606 087
- EP-A1- 0 412 398
- EP-A2- 1 417 880
- WO-A-00/52993
- WO-A1-00/74492
- CH-A5- 677 171
- DE-A1- 3 714 199
- GB-A- 1 056 218
- GB-A- 2 089 315
- GB-A- 2 244 468
- US-A- 4 595 125
- US-A- 5 502 898
- US-A- 6 028 270
- US-A- 6 085 583

## Description

The invention relates to a method for removing a quantity of fodder from a stock thereof according to the preamble of claim 1, as well as to an apparatus for removing fodder from a stock thereof according to the preamble of claim 7.

Such methods and apparatuses are known in various embodiments thereof, see for example EP-A-1 062 861 and DE-U-201 04 426. When a quantity of fodder is being removed from a stock thereof, it is important that the correct quantity by weight is removed in order to prevent loss of fodder. It is known to fit an apparatus of the aforesaid kind with an electronic weighing system, by means of which the fodder present in the container can be weighed.

US 4, 595, 125 discloses a method for continuously dispensing fodder using rollers. For each revolution of the rollers a specific volume of material is deposited on a conveyor. Subsequently, the removed volume is weighed. If the determined weight is too high or too low, the conveyor speed is adjusted in order to transport exactly the desired amount of fodder.

GB 2,089,315 discloses a silage handling unit comprising a depth determining structure. The structure determines the maximum depth of a slice of silage to be removed.

The known apparatuses have this drawback that it is not possible to determine the weight before the fodder is separated from the stock of fodder.

The object of the invention is to provide a method and apparatus of the kind referred to in the introduction, in which this drawback is obviated in a simple manner.

According to the invention this object is achieved by a method according to claim 1.

The invention is based on the perception that it is possible, even when using simple means, to determine the volume of a quantity of fodder to be separated before the fodder is separated from the stock. In this way the removal of an excessive quantity of fodder from the stock of fodder is prevented.

A suitable apparatus for implementing the method according to the invention is characterized by claim 7.

The invention will now be explained in more detail with reference to the drawing, which shows a few very schematic embodiments of the apparatus according to the invention.

Fig. 1 shows an example of an apparatus not falling under the invention, in which the removing means are embodied as a cutting device.

Fig. 2 shows an embodiment of the apparatus according to the invention, in which the removing means are likewise embodied as a cutting device, and in which sensors for measuring the volume to be separated are used.

Figs. 3 and 4 show an embodiment corresponding to Fig. 2, in which sensors for determining the volume of the separated quantity of fodder during the removal thereof are used.

Figs. 5 and 6 are a top plan view and a side elevation, respectively, of an embodiment corresponding to Fig. 2, which is fitted with a sensor for determining the profile of the front wall of the stock of fodder.

Fig. 7 shows an embodiment of the apparatus according to Fig. 5, in which two sensors are used for scanning the profile of the front wall of the stock of fodder.

Figs. 8 and 9 show an embodiment of the apparatus according to the invention, which uses one or two distance sensors whose measuring direction can be pivoted.

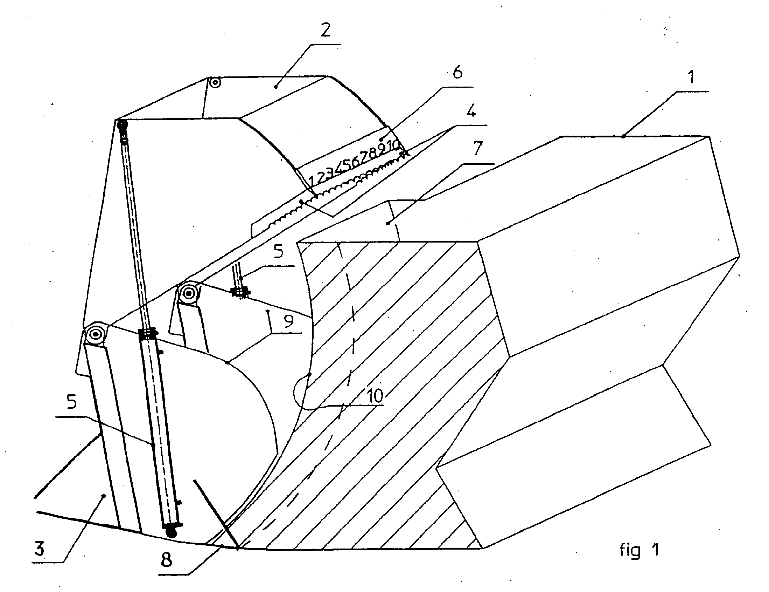

In Fig. 1 there is shown an apparatus for removing fodder from a stock thereof, in this case a stock of silage 1, which apparatus comprises removing means consisting of a removing jaw 2 and a loading flap 3 for receiving removed fodder. In the illustrated embodiment, the removing jaw 2 is embodied as a cutting jaw provided with cutting blades 4. Said cutting blades may or may not be driven. Alternatively, double cutting blades may be used, in which case one blade, or both, may be driven.

The removing jaw 2 is pivotally connected to the loading flap 3, it can be pivoted with respect to the loading flap 3 by means of cylinder-piston assemblies 5. The removing means 2,3 can be hitched to the front or to the rear of a tractor. It is noted that the construction of the apparatus as described above is known per se and does not form the subject matter of the present patent application. For a more detailed description, reference is made to the aforesaid publications EP-A-1 062 861 and DE-U-201 04 426.

The removing jaw 2 of the apparatus that is shown in Fig. 1 is provided with a scale division 6 (schematically indicated) for the working width of the removing jaw. Preferably, said scale division 6 is present on the inner side of the removing jaw 2 so as to enable easy reading thereof. As will be explained below, the volume of a quantity of fodder 7 to be separated from the stock of fodder 1 can easily be determined by means of the scale division 6. When using the apparatus described herein, the loading flap 3 is moved under the stock of fodder with its bottom plate 8 until one of the side walls 9, or both side walls, abut(s) against the front wall 10 of the stock of silage 1. Thus the maximum depth of the block 7 to be cut out is determined. The driver of the tractor (not shown) can now position the apparatus described herein with respect to the stock of silage, using the scale division, in such a manner that a block 7 having the desired width can be cut from the stock. In this way the volume of the quantity of silage to be separated is determined.

If the apparatus described herein is provided with a weighing computer, said weighing computer will be arranged for establishing a reference value, in particular the weight of a specific volume of fodder. To that end, a maximum block of silage, i.e. a block having a maximum height, a maximum working depth and a maximum working width, is cut from the stock 1 by means of the apparatus described herein, and the weight of such a block having a maximum volume is determined by the weighing computer. When the apparatus is subsequently used for removing a desired quantity of fodder expressed as a weight, said weight is input via input means (not shown), and the computer will display a volume to be removed on a display screen (likewise not shown). For example, if the maximum block weighs 1100 kilograms and the desired quantity is 1650 kilograms, the computer will indicate on the display that 150%, or 1.5 times the maximum volume is to be cut out. If a block of 1000 kilograms is cut out in the first removing cycle, the computer will display a value of 59,09% on the display screen as the volume yet to be separated. Using the scale division, the driver can easily manoeuvre the apparatus in such a manner with respect to the stock 1 that about 60% of the maximum volume will be removed.

In those cases in which the composition of the stock of silage varies, a specific volume of fodder may be removed from the stock at certain intervals for the purpose of establishing a new reference value by measuring the weight of the removed volume. Furthermore it is possible to establish different reference values when fodder is removed from different stocks of silage, which reference values are used when removing a desired weight from the associated stock of fodder.

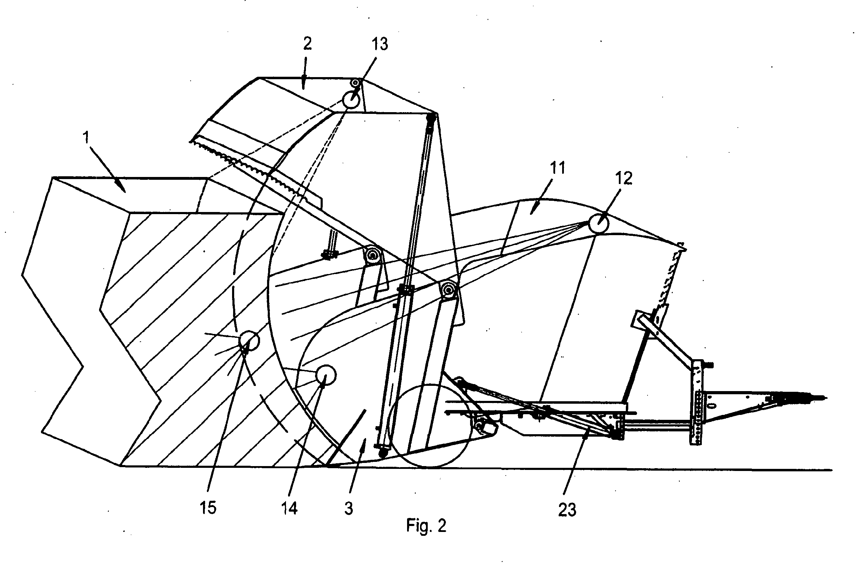

Fig. 2 shows an embodiment of the apparatus according to the invention, which is fitted with the same removing means 2, 3. In this case the removing means 2, 3 is mounted on a fodder mixing cart 11, which will not be described in more detail herein. In this embodiment, the volume of the quantity of fodder to be separated is measured by means of sensors 12-15 (schematically indicated), for example laser telemeters. The sensor 12 is arranged for measuring the depth of the block to be cut out, the sensor 13 is arranged for measuring the height of the block to be cut out, whilst the sensors 14, 15 measure the width of the block to be cut out. The sensors 12-15 are connected to the computer (not shown), which is capable of computing the volume of the block to be cut out on the basis of the measuring signals from the sensors 12-15. The advantage of this embodiment is that it is possible to vary not only the width dimension but also the depth and height dimensions of the block to be cut out, so as to cut out a specific, desired volume.

Also with this embodiment it is possible to cut out a volume at certain intervals so as to measure the weight of said volume for the purpose of registering a reference value in the computer.

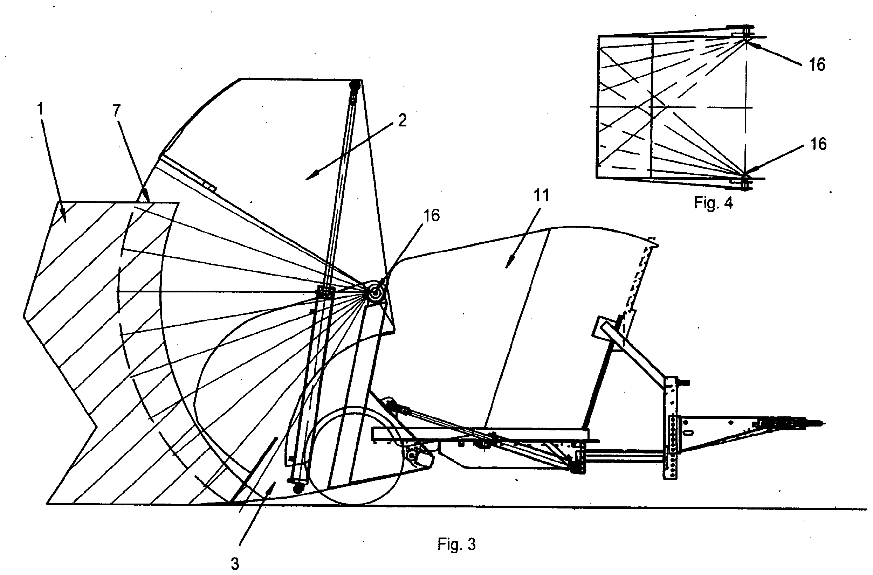

Figs. 3 and 4 schematically show another embodiment of the apparatus according to the invention, which mainly corresponds to the apparatus that is shown in Fig. 2. In this case, two sensors 16 are used instead of the sensors 12-15, which sensors measure the volume of the cut-out portion when cutting fodder from the stock 1, so that the computer can compute whether the desired weight is reached yet. As a result, cutting can be stopped at a specific height as soon as the desired weight is reached.

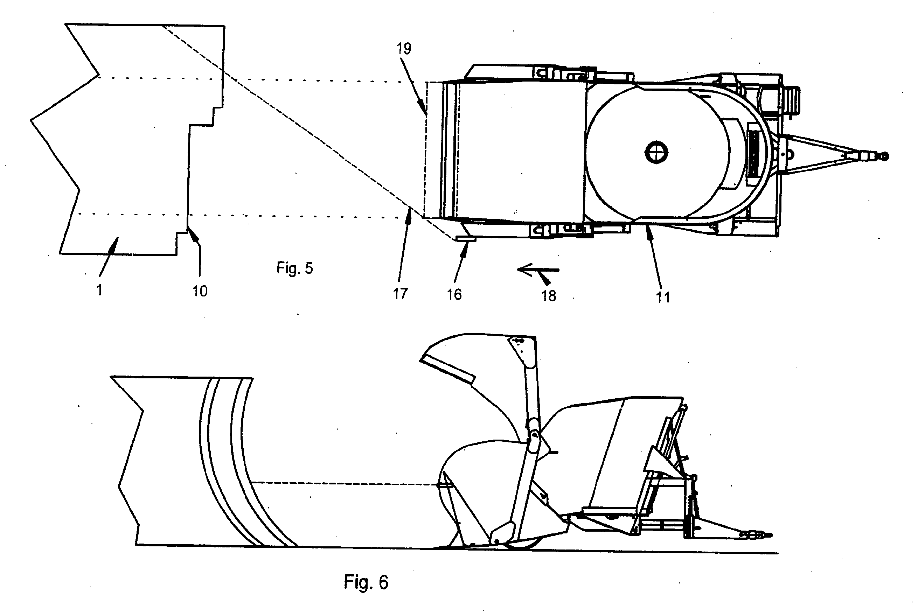

Figs. 5 and 6 schematically show an embodiment of the apparatus according to the invention, in which a distance sensor 16 is used for scanning the profile of the front wall 10 of the stock of fodder. The measuring direction of the distance sensor 16 is indicated by a dashed line 17 in Figs. 5 and 6. Said measuring direction 17 includes an angle with the longitudinal axis of the fodder mixing cart 11 or with the direction of movement 18 of the fodder mixing cart 11 when said to cart is being moved to the stock of fodder 1 by a tractor (not shown). As a result of this configuration, the distance sensor 16 scans the operating area behind the removing means 2, 3 while the fodder mixing cart 11 is being moved in rearward direction. The distance sensor 16 is connected to the computer (not shown) with which the fodder mixing cart 11 is equipped. The computer can determine the cross-sectional profile of the front wall 10 of the stock of fodder on the basis of the signal from the distance sensor 16. Based on said cross-sectional profile, the known removing range of the removing means 2, 3 and the height of the stock of fodder, the computer can calculate the volume of the fodder that can be cut from the stock by the removing means 2, 3. The removing range of the removing means 2, 3, which is defined by the maximum removing width and removing depth, is indicated by a dashed line 19 in the top plan view of Fig. 5.

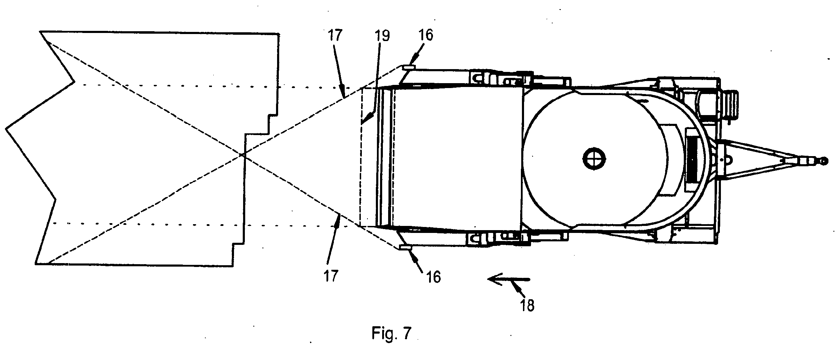

It is noted the stepped profile of the front wall 10 may render it impossible for the distance sensor 16 to scan all parts of said profile. The missing information can be determined by the computer on the basis of a suitable algorithm. Alternatively, the embodiment that is shown in Fig. 7 may be used, in which two distance sensors 16 having measuring directions 17 are used. For the rest, the embodiment of Fig. 7 corresponds to the embodiment that is shown in Figs. 5 and 6.

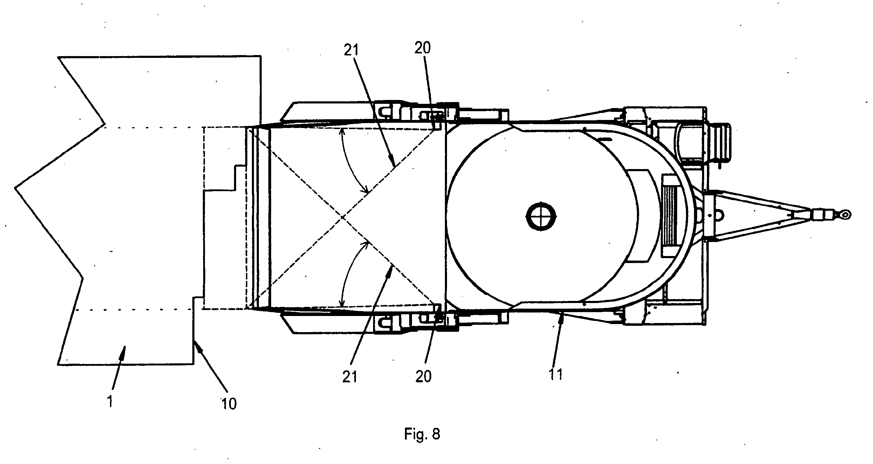

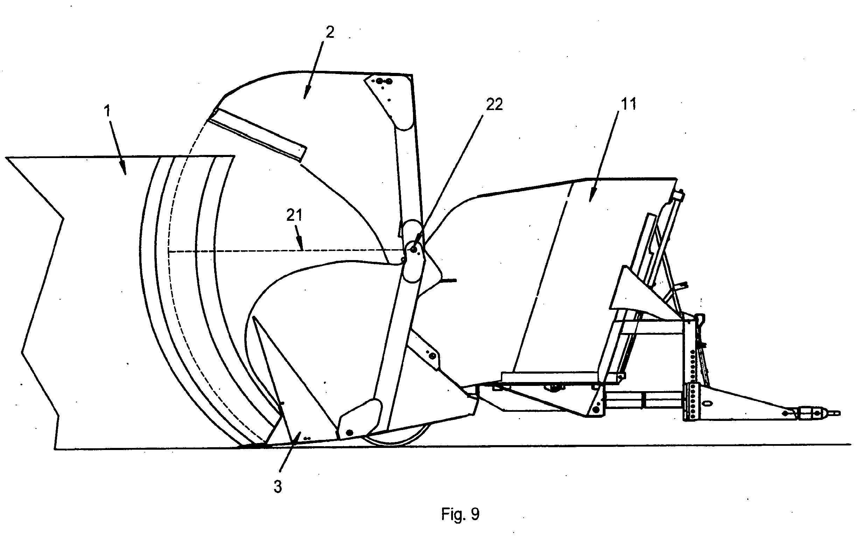

Figs. 8 and 9 show an embodiment of the apparatus described herein that substantially corresponds to the embodiments as shown in Figs. 5-7. In the embodiment according to Figs. 8 and 9, the removing means 2, 3 is provided with two distance sensors 20, the measuring direction 21 (indicated by a dashed line) of which can be pivoted for the purpose of scanning the profile of the front wall 10 of the stock of fodder 1. Said pivoting of the measuring direction 21 can be achieved, for example, in that the distance sensor 20 is pivotally connected to the loading flap 3. In this embodiment, the fodder mixing cart 11 may first be positioned against the front wall 10 of the stock of fodder 1 with its loading flap, after which the profile of the front wall 10 is scanned by the distance sensors 20. On the basis of the signals received from the distance sensors 20, the computer can calculate the volume of the fodder to be removed in the same manner as in the embodiment of Figs. 5-7. In this case it is also possible, of course, to use only one distance sensor 20, and to calculate the volume of the parts that cannot be scanned, for example due to the fact that the profile is stepped, on the basis of a suitable algorithm. Instead of using two distance sensors, it is furthermore possible to use one distance sensor 20 which employs two distance scanning beams, one beam of which scans the profile directly, whilst the other beam scans the profile from the other direction via an optical module mounted at the position of the other sensor 20.

The removing means 2,3 can be adjusted in height with respect to the fodder mixing cart 11 in a usual manner by means of a cylinder-piston assembly 23 (see Fig. 2). With the apparatus described herein it is important that the height of the pivoting point 22 of the removing jaw is known, because said height determines the course of the cutting curve described by the removing jaw 2 in comparison with the preceding cutting curves. To that end a height gauge (not shown) may be provided, which height gauge is connected to the computer, so that the computer can take the height of the pivoting point 22 into account when calculating the volume of the part of the stock of fodder 1 that is to be removed. Alternatively, the height gauge may be used by the computer for positioning the loading flap 3 at the same height relative to the fodder mixing cart 11 with every pass of the removing means 2, 3. Said adjustment of the height may also be carried out by the user of the apparatus, of course.

It is furthermore noted that the fodder mixing cart 11 of the embodiment of Fig. 1 and Figs. 5-9, too, may be equipped with a sensor for measuring the height of the stock of fodder 1. Said sensor is preferably connected to the computer, so that the height of the stock of fodder 1 need not be input manually.

From the foregoing it will be apparent that the invention provides a method and apparatus by means of which a desired quantity by weight of fodder can be separated from a stock thereof by determining the volume of the quantity of fodder that is to be separated or that has been separated. It will be apparent that the invention may be implemented with any type of removing means. The type of removing means 2, 3 that is described herein is merely shown by way of example, therefore.

The invention is not limited to the embodiments as described above, which can be varied in many ways within the scope of the invention as defined in the claims.

## Claims

1. A method for removing a quantity of fodder from a stock (1) thereof, wherein fodder is separated from the stock and placed into a container by removing means (2) having a removing range, which stock of fodder has a front wall (10) to which the removing means has access, wherein a specific weight of fodder is to be separated in one or more operations of the removing means (2), **characterized in that** the volume of the quantity of fodder that is to be separated or that has been separated is measured, with the weight being determined on the basis of the volume that is to be separated or that has been separated;
wherein the volume that has been separated or that is to be separated is calculated by a computer using measurements by means of one or more sensors (12-15, 16, 20).

2. A method according to claim 1, wherein at least one distance sensor (16) scans the profile of the front wall (10) of the stock of fodder, which scanned profile is used for determining the volume.

3. A method according to claim 1, wherein the volume of the separated fodder is determined while it is being removed.

4. A method according to any one of the preceding claims, wherein a weight to be removed is input into a computer, with the computer determining the volume to be removed on the basis of a reference value, which volume is displayed on a display screen.

5. A method according to claim 4, wherein fodder present in the container is weighed and wherein the computer subtracts the weight as a volume from the volume to be removed and displays the remainder.

6. A method according to claim 4 or 5, wherein a specific volume of fodder is removed at certain intervals and the weight of the removed volume is determined for the purpose of establishing the reference value.

7. Apparatus for removing fodder from a stock (1) thereof, comprising removing means (2) having a removing range and a container (11) for receiving removed fodder, which apparatus can be moved according to a direction of movement with respect to the stock of fodder for the purpose of placing the removing means (2) in an operating position, **characterized by** means (6, 12-15, 16, 20) configured for measuring the volume of the fodder that is to be separated or that has been separated, wherein said means comprise one or more sensors and a computer arranged for calculating the volume of the fodder on the basis of the sensor signals.

8. Apparatus according to claim 7, wherein said computer is arranged for determining the separated amount of fodder on the basis of the sensor signals while the fodder is being removed.

9. Apparatus according to claim 7, wherein said computer is arranged for determining the amount of fodder to be separated on the basis of the sensor signals while the fodder is being removed.

10. Apparatus according to claim 9, wherein at least one distance sensor (16) is provided, whose measuring direction includes an angle with the direction of movement for scanning a working area behind the removing means (2), wherein the computer is arranged for determining the cross-sectional profile of the front wall (10) of the stock of fodder on the basis of the measuring data obtained from the distance sensor(s).

11. Apparatus according to claim 9, wherein a distance sensor (20) is provided, whose measuring direction (21) can be pivoted for scanning the removing range of the removing means, wherein the computer is arranged for determining the cross-sectional profile of the front wall of the stock of fodder on the basis of the measuring data obtained from the distance sensor.

12. Apparatus according to claim 11, wherein said distance sensor (20) is present on one side of the removing means (3) and a second distance sensor (20) or an optical element interacting with the first distance sensor is present on the opposite side for scanning the removing range from two different directions.

13. Apparatus according to any one of the claims 9-12, wherein the removing means is adjustable for height and comprises a loading flap (3) and a removing jaw (2) capable of pivoting movement with respect to said loading flap, wherein means are provided for positioning the removing means at a particular height for removing an amount of fodder.

14. Apparatus according to any one of the claims 9-12, wherein the removing means is adjustable for height and comprises a loading flap (3) and a removing jaw (2) capable of pivoting movement with respect to said loading flap, wherein a height sensor is provided for measuring the height of the removing means, wherein the computer is arranged for determining the volume on the basis of the height signal from the height sensor.

15. Apparatus according to any one of the claims 9-14, wherein one of the sensors is a sensor (13) for measuring the height of the stock of fodder.

16. Apparatus according to any one of the claims 7-15, wherein a computer comprising input means and a display screen is provided, which computer is arranged for registering the weight of a specific volume of fodder, wherein a weight to be removed can be input and wherein the computer displays a volume to be removed.

17. Apparatus according to claim 16, wherein weighing means for weighing fodder present in the container are connected to the computer, and wherein the computer is arranged for indicating the difference in volume between the volume to be removed and the quantity of fodder that is present in the container.

## Patentansprüche

1. Verfahren zum Abtragen einer Futtermenge aus einem Futtervorrat (1), wobei Futter durch eine Entnahmeeinrichtung (2), die einen Entnahmebereich hat, von dem Vorrat separiert und in einen Behälter eingebracht wird, wobei der Futtervorrat eine Vorderwand (10) aufweist, auf welche die Entnahmeeinrichtung Zugriff hat, wobei Futter eines bestimmten Gewichts in einem oder mehreren Arbeitsschritten der Entnahmeeinrichtung (2) separiert werden soll, **dadurch gekennzeichnet, dass** das Volumen der Futtermenge, das separiert werden soll oder das separiert worden ist, gemessen wird, und das Gewicht auf Basis des Volumens, das separiert werden soll oder das separiert worden ist, ermittelt wird,
wobei das Volumen, das separiert worden ist oder das separiert werden soll, von einem Computer anhand von Messungen mittels eines oder mehrerer Sensoren berechnet wird.

2. Verfahren nach Anspruch 1, wobei mindestens ein Abstandssensor (16) das Profil der Vorderwand (10) des Futtervorrats abtastet, wobei das abgetastete Profil zur Ermittlung des Volumens verwendet wird.

3. Verfahren nach Anspruch 1, wobei das Volumen des separierten Futters ermittelt wird, während es entnommen wird.

4. Verfahren nach einem der vorstehenden Ansprüche, wobei ein Gewicht, das entnommen werden soll, in einen Computer eingegeben wird, wobei der Computer auf Basis eines Referenzwerts den Wert für das zu entnehmende Volumen ermittelt, das auf einem Anzeigeschirm angezeigt wird.

5. Verfahren nach Anspruch 4, wobei das in dem Behälter vorhandene Futter gewogen wird und der Computer das Gewicht als ein Volumen von dem Volumen, das entnommen werden soll, subtrahiert und den Restbetrag anzeigt.

6. Verfahren nach Anspruch 4 oder 5, wobei in bestimmten Intervallen ein vorgegebenes Futtervolumen entnommen wird und das Gewicht des entnommenen Volumens ermittelt wird, um den Referenzwert zu gewinnen.

7. Vorrichtung zum Abtragen von Futter aus einem Futtervorrat (1) bzw. zur Entnahme von Futter aus einem Futtervorratsstapel (1), die eine Entnahmeeinrichtung (2), die einen Entnahmebereich hat, und einen Behälter (11) zur Aufnahme des entnommenen Futters aufweist, wobei die Vorrichtung in eine Bewegungsrichtung bezüglich des Futtervorrats bewegt werden kann, um die Entnahmeeinrichtung (2) in eine Arbeitsposition zu bringen, **gekennzeichnet durch** eine Einrichtung (6,12-15,16,20), die zum Messen des Volumens des Futters, das separiert werden soll oder das separiert worden ist, konfiguriert ist, wobei die Einrichtung einen oder mehrere Sensoren und einen Computer umfasst, wobei der Computer eingerichtet ist, auf Basis der Sensorsignale das Volumen des Futters zu berechnen.

8. Vorrichtung nach Anspruch 7, wobei der Computer eingerichtet ist, auf Basis der Sensorsignale die separierte Futtermenge zu ermitteln, während das Futter entnommen wird.

9. Vorrichtung nach Anspruch 7, wobei der Computer eingerichtet ist, auf Basis der Sensorsignale die Futtermenge, die separiert werden soll, zu ermitteln, während das Futter entnommen wird.

10. Vorrichtung nach Anspruch 9, wobei mindestens ein Abstandssensor (16) bereitgestellt ist, dessen Messrichtung einen Winkel mit der Bewegungsrichtung einschließt, um einen Arbeitsbereich hinter der Entnahmeeinrichtung (2) abzutasten, wobei der Computer eingerichtet ist, auf Basis der von dem Abstandssensor oder den Abstandssensoren gewonnenen Messdaten das Querschnittprofil der Vorderwand (10) des Futtervorrats zu ermitteln.

11. Vorrichtung nach Anspruch 9, wobei ein Abstandssensor (20) bereitgestellt ist, dessen Messrichtung (21) geschwenkt werden kann, um den Entnahmebereich der Entnahmeeinrichtung abzutasten, wobei der Computer eingerichtet ist, auf Basis der von dem Abstandssensor gewonnenen Messdaten das Querschnittprofil der Vorderwand (10) des Futtervorrats zu ermitteln.

12. Vorrichtung nach Anspruch 11, wobei der Abstandssensor (20) an der einen Seite der Entnahmeeinrichtung (3) angeordnet ist und ein zweiter Abstandssensor (20) oder ein optisches Element, das mit dem ersten Abstandssensor zusammenarbeitet, an der gegenüberliegenden Seite angeordnet ist, um den Entnahmebereich aus zwei unterschiedlichen Richtungen abzutasten.

13. Vorrichtung nach einem der Ansprüche 9 bis 12, wobei die Höhenposition der Entnahmeeinrichtung anpassbar ist und die Entnahmeeinrichtung eine Ladeklappe (3) und eine bezüglich der Ladeklappe drehbare Entnahmeklaue (2) aufweist, wobei eine Einrichtung bereitgestellt ist, um zur Entnahme einer Futtermenge die Entnahmeeinrichtung in einer bestimmten Höhe anzuordnen.

14. Vorrichtung nach einem der Ansprüche 9 bis 12, wobei die Höhenposition der Entnahmeeinrichtung anpassbar ist und die Entnahmeeinrichtung eine Ladeklappe (3) und eine bezüglich der Ladeklappe drehbare Entnahmeklaue (2) aufweist, wobei zum Messen der Höhenposition der Entnahmeeinrichtung ein Höhensensor bereitgestellt ist und der Computer eingerichtet ist, auf Basis des Höhensignals aus dem Höhensensor das Volumen zu ermitteln.

15. Vorrichtung nach einem der Ansprüche 9 bis 14, wobei einer der Sensoren ein Sensor (13) zum Messen der Höhe des Futtervorrats ist.

16. Vorrichtung nach einem der Ansprüche 7 bis 15, wobei ein Computer mit einer Eingabeeinrichtung und einem Anzeigebildschirm bereitgestellt ist, wobei der Computer eingerichtet ist, das Gewicht eines spezifischen Futtervolumens zu registrieren, wobei ein Gewicht, das entnommen werden soll, eingegeben werden kann und der Computer den Wert für ein zu entnehmendes Volumen anzeigt.

17. Vorrichtung nach Anspruch 16, wobei mit dem Computer eine Wiegeeinrichtung zum Wiegen von in dem Behälter vorhandenem Futter verbunden sind und der Computer eingerichtet ist, die Volumendifferenz zwischen dem Volumen, das entnommen werden soll, und der Futtermenge, die in dem Behälter vorhanden ist, anzuzeigen.

## Revendications

1. Procédé pour l'extraction d'une quantité de foin d'une réserve de fourrage (1), dans lequel du foin est séparé de la réserve et placé dans un conteneur à l'aide de moyens d'extraction (2) ayant une plage d'extraction, la réserve de fourrage présentant une paroi avant (10) à laquelle les moyens d'extraction ont accès, et dans lequel un poids spécifique de foin doit être séparé en une ou plusieurs opérations menées par les moyens d'extraction (2), **caractérisé en ce que** le volume de la quantité de foin qui doit être séparée ou qui a été séparée est mesuré, le poids étant déterminé sur la base du volume qui doit être séparé ou qui a été séparé, dans lequel le volume qui a été séparé ou qui doit être séparé est calculé par un ordinateur sur la base de mesures au moyen d'un ou de plusieurs détecteurs.

2. Procédé selon la revendication 1, dans lequel au moins un détecteur de distance (16) balaie le profil de la paroi avant (10) de la réserve de fourrage, le profil balayé étant utilisé pour la détermination du volume.

3. Procédé selon la revendication 1, dans lequel le volume du foin séparé est déterminé pendant qu'il est en cours d'extraction.

4. Procédé selon l'une quelconque des revendications précédentes, dans lequel une valeur de poids à extraire est entrée dans un ordinateur, l'ordinateur déterminant le volume qui doit être extrait sur la base d'une valeur de référence, ledit volume étant affiché sur un écran d'affichage.

5. Procédé selon la revendication 4, dans lequel le foin présent dans le conteneur est pesé et dans lequel l'ordinateur soustrait à partir du poids le volume du volume devant être extrait et affiche le résidu.

6. Procédé selon la revendication 4 ou 5, dans lequel un volume spécifique de foin est extrait à des intervalles donnés et le poids du volume extrait est déterminé afin de définir la valeur de référence.

7. Appareil pour l'extraction de foin d'une réserve de fourrage (1), comprenant des moyens d'extraction (2) ayant une plage d'extraction et un conteneur (11) destiné à recevoir le foin extrait, ledit appareil pouvant être déplacé selon une direction de déplacement par rapport à la réserve de fourrage aux fins de placement des moyens d'extraction (2) dans une position de fonctionnement, **caractérisé par** des moyens (6, 12 à 15, 16, 20) configurés pour mesurer le volume du foin qui doit être séparé ou qui a été séparé, dans lequel les moyens comprennent un ou plusieurs détecteurs et un ordinateur, ledit ordinateur étant organisé pour calculer le volume du foin sur la base des signaux du(des) détecteur(s).

8. Appareil selon la revendication 7, ledit ordinateur étant organisé pour déterminer la quantité de foin séparée sur la base des signaux du(des) détecteur(s) pendant que le foin est en cours d'extraction.

9. Appareil selon la revendication 7, ledit ordinateur étant organisé pour déterminer la quantité de foin qui doit être séparée sur la base des signaux du(des) détecteur(s) pendant que le foin est en cours d'extraction.

10. Appareil selon la revendication 9, dans lequel au moins un détecteur de distance (16) est prévu, sa direction de mesure présentant un angle avec la direction de déplacement afin de balayer une zone de travail située à l'arrière des moyens d'extraction (2), et dans lequel l'ordinateur est organisé pour déterminer le profil en coupe transversale de la paroi avant (10) de la réserve de fourrage sur la base des données de mesure obtenues de la part du(des) détecteur(s) de distance.

11. Appareil selon la revendication 9, dans lequel un détecteur de distance (20) est prévu, sa direction de mesure (21) pouvant pivoter afin de balayer la plage d'extraction des moyens d'extraction, et dans lequel l'ordinateur est organisé pour déterminer le profil en coupe transversale de la paroi avant de la réserve de fourrage sur la base des données de mesure obtenues de la part du détecteur de distance.

12. Appareil selon la revendication 11, dans lequel ledit détecteur de distance (20) est présent sur un côté des moyens d'extraction (3) et un deuxième détecteur de distance (20) ou un élément optique interagissant avec le premier détecteur de distance est présent sur le côté opposé afin de balayer la plage d'extraction selon deux directions différentes.

13. Appareil selon l'une quelconque des revendications 9 à 12, dans lequel les moyens d'extraction sont ajustables en hauteur et comprennent un volet de chargement (3) et une mâchoire d'extraction (2) qui peut avoir un mouvement de pivotement par rapport audit volet de chargement, et dans lequel des moyens sont prévus pour positionner les moyens d'extraction à une hauteur particulière pour l'extraction d'une quantité de foin.

14. Appareil selon l'une quelconque des revendications 9 à 12, dans lequel les moyens d'extraction sont ajustables en hauteur et comprennent un volet de chargement (3) et une mâchoire d'extraction (2) qui peut avoir un mouvement de pivotement par rapport audit volet de chargement, dans lequel un détecteur de hauteur est prévu pour mesurer la hauteur des moyens d'extraction, et dans lequel l'ordinateur est organisé pour déterminer le volume sur la base du signal de hauteur provenant du détecteur de hauteur.

15. Appareil selon l'une quelconque des revendications 9 à 14, dans lequel un des détecteurs est un détecteur (13) de mesure de la hauteur de la réserve de fourrage.

16. Appareil selon l'une quelconque des revendications 7 à 15, dans lequel un ordinateur comprenant des moyens d'entrée et un écran d'affichage est prévu, ledit ordinateur étant organisé pour enregistrer le poids d'un volume spécifique de foin, dans lequel une valeur de poids devant être extrait peut être entrée, et dans lequel l'ordinateur affiche un volume devant être extrait.

17. Appareil selon la revendication 16, dans lequel des moyens de pesée destinés à peser le foin présent dans le conteneur sont reliés à l'ordinateur, et dans lequel l'ordinateur est organisé pour indiquer la différence, en volume, entre le volume devant être extrait et la quantité de foin qui est présente dans le conteneur.
